# EUROPÄISCHE PATENTSCHRIFT

(11) **EP 2 361 179 B1**
(45) Veröffentlichungstag und Bekanntmachung des Hinweises auf die Patenterteilung: **22.05.2013**
(21) Anmeldenummer: 09760840.0
(22) Anmeldetag: 24.11.2009
(51) Int. Cl.: B29C 70/30, B29C 33/44, B29C 33/46, B29C 37/00

(54) **VERFAHREN, SYSTEM UND FORMWERKZEUG ZUM HERSTELLEN VON BAUTEILEN AUS FASERVERBUNDWERKSTOFFEN**
METHOD, SYSTEM AND MOULDING TOOL FOR PRODUCING COMPONENTS MADE OF FIBER COMPOSITE MATERIALS
PROCÉDÉ, SYSTÈME ET MOULE DE FORMAGE POUR LA FABRICATION DE PIÈCES EN MATÉRIAUX COMPOSITES RENFORCÉS PAR DES FIBRES

(30) Priorität: 16.12.2008 DE 102008062477; 16.12.2008 US 201915 P
(43) Veröffentlichungstag der Anmeldung: 31.08.2011
(73) Patentinhaber: Airbus Operations GmbH, 21129 Hamburg (DE)
(72) Erfinder: JUNG, Manuel, 21717 Fredenbeck (DE); BECHTOLD, Michael, 71297 Mönsheim (DE)
(74) Vertreter: Maiwald Patentanwalts GmbH
(86) Internationale Anmeldenummer: PCT/EP2009/065712
(87) Internationale Veröffentlichungsnummer: WO 2010/072495

(56) Entgegenhaltungen:
- EP-A2- 1 231 046
- WO-A2-2008/133748
- DE-B- 1 280 549
- DE-B- 1 286 741
- JP-A- 9 193 252
- US-A- 4 061 310
- US-A1- 2008 251 409

## Beschreibung

### TECHNISCHES GEBIET DER ERFINDUNG

Die Erfindung betrifft ein Verfahren zum Herstellen von Bauteilen aus Faserverbundwerkstoffen, ein System zum Herstellen von Bauteilen aus Faserverbundwerkstoffen, ein Formwerkzeug für die Herstellung von Bauteilen aus Faserverbundwerkstoffen.

### HINTERGRUND DER ERFINDUNG

Beim Herstellen von Bauteilen aus faserverstärkten Kunststoffen mittels Formwerkzeugen - seien es männliche oder weibliche Formwerkzeuge - ist nach dem Aushärten mit einem selbständigen Lösen der Komponente der Formwerkzeuge nicht zu rechnen. Es ist deshalb erforderlich, einen manuellen Entformvorgang durchzuführen. Mit "Entformen" ist dabei das Entnehmen des ausgehärteten Bauteils aus der Form zu verstehen. Dies geschieht nach dem derzeitigen Stand der Technik durch das Anheben des Bauteils mittels Keilwerkzeugen am Bauteilrand, wobei diese Keilwerkzeuge beispielsweise aus Holz oder aus einem weichen Kunststoff, beispielsweise Polytetrafluorethylen, hergestellt sein können.

Bei größeren Bauteilen ist zudem das "Nachschieben" der Keilwerkzeuge erforderlich, bis sich das Bauteil vollständig vom Formwerkzeug gelöst hat. Insbesondere bei großflächigen Schalenkomponenten, wie sie beispielsweise in Form von Flügeln, Flugzeugrumpfschalen, Solarpanels und dergleichen auftreten, müssen die Keilwerkzeuge sehr weit in Richtung der Bauteilmitte vorangetrieben werden, bis sich das Bauteil letztendlich vom Formwerkzeug löst.

Bei mangelhafter oder fehlerhafter Beschichtung der Formwerkzeuge mit einem Trennmittel und bei sehr großen Bauteildimensionen mit schlechten Zugänglichkeiten kann es erforderlich sein, zusätzliche mechanische Hilfsmittel mit einer größeren Hebelkraftwirkung zum Lösen des Bauteils einzusetzen. Der manuelle Einsatz derartiger mechanischer Hilfsmittel könnte zudem auch dann erforderlich sein, wenn die Bauteilgeometrie bereichsweise einen leichten Hinterschnitt aufweist.

DE 198 54 735 A zeigt eine Hülse aus thermisch verformbaren Material sowie ein Verfahren zu deren Herstellung. Die Hülse besteht aus einem im wesentlichen rohrförmigen Grundkörper mit einem zylindrischen Außenumfang mit im wesentlichen konstanten Radius und einen sich in einer axialen Richtung konisch verjüngenden zylindrischen Innenumfang.

DE 756 995 zeigt eine Preßform zum Verarbeiten von härtbaren Kunstharzpreßstoffen, aus der das fertige Preßstück durch Druckluft entfernt wird.

JP 09 193252 A zeigt ein Formwerkzeug gemäß dem Oberbegriff des Anspruchs 7, bei dem mit Hilfe von Luftausblasanschlüssen ausgehärtete Körper aus Faserverbundmaterialien von einem Formwerkzeug abgelöst werden können.

Formwerkzeuge mit sogenannten "Schiebereinsätzen" können bei Bauteilen mit hoher Oberflächenanforderung, wie etwa bei aerodynamischen Flächen oder funktionalen Flächen eines Fluggeräts mit hoher Toleranzanforderung, nicht zum Einsatz kommen. Gründe hierfür sind beispielsweise die Tatsachen, dass sich Keilwerkzeuge auf der Bauteiloberfläche abzeichnen können, im Matrixmaterial sogenannte "Nasen" entstehen können und das Abdichten gegen Harz während der Bauteilaushärtung schwierig ist.

### ZUSAMMENFASSUNG DER ERFINDUNG

Demgemäß könnte es als Aufgabe der Erfindung angesehen werden, ein Verfahren zum Herstellen eines Rohbauteils aus Faserverbundwerkstoffen vorzuschlagen, das zumindest einige der vorangehend geschilderten Nachteile reduziert oder gänzlich beseitigt. Im Besonderen könnte eine Aufgabe sein, ein derartiges Verfahren vorzuschlagen, bei dem auch großflächige Bauteile schonend aus einem Formwerkzeug entnommen werden können, ohne dass dabei eine Bauteiloberfläche beschädigt wird, sich Nasen bilden oder das Bauteil generell mechanisch zu stark belastet wird.

Diese Aufgabe könnte durch ein Verfahren zum Herstellen eines Rohbauteils aus Faserverbundwerkstoffen, und ein Formwerkzeug zum Herstellen eines Rohbauteils aus Faserverbundwerkstoffen, gemäß den unabhängigen Ansprüchen gelöst werden. Verschiedene Ausführungsbeispiele der vorliegenden Erfindung werden in den abhängigen Ansprüchen beschrieben.

Ein wichtiger Aspekt des erfindungsgemäßen Verfahrens liegt darin, dass ein Bauteil, welches durch Legen und Laminieren von Fasermaterial in einem Formwerkzeug geformt und anschließend ausgehärtet wird, nicht mittels Keilwerkzeugen oder anderen mechanisch stark intervenierenden Werkzeugen dem Formwerkzeug entnommen wird, sondern mittels aufblasbarer Hebekissen. Die Erfindung zeichnet sich dementsprechend dadurch aus, dass ein deutlich kontrollierbareres Entformverfahren zum Einsatz kommt. Durch die Verwendung von beispielsweise druckluftgesteuerten Hebekissen können Kraft oder Weg beim Entformen kontrolliert und so ein weitgehend behutsames Ablösen des Bauteils vom Formwerkzeug sichergestellt werden.

Bei einem ersten Konzept des erfindungsgemäßen Verfahrens wird ein Formwerkzeug verwendet, welches am zukünftigen Bauteilrand eine Aussparung für ein Hebekissen aufweist. Vor dem Legen und Laminieren des Bauteils in dem Formwerkzeug wird zum Wahren der vorgegebenen Oberfläche in diese Aussparung ein Platzhalter eingelegt, der die Aussparung vollständig ausfüllt und mit der Oberfläche des Formwerkzeugs bündig abschließt. Der Platzhalter könnte dabei einteilig oder in einer mehrteiligen Schichtung ausgeführt sein.

Je nach Anforderung an die Oberfläche des Bauteils sollte die Aussparung in einem Bereich außerhalb des eigentlichen Bauteils in einem sogenannten "Beschnittbereich" liegen. Das zu fertigende Bauteil erstreckt sich in diesen Beschnittbereich hinein, der außerhalb der gewünschten Endform liegt. Nach dem Aushärten und Entnehmen des Bauteils aus dem Formwerkzeug kann sodann innerhalb des Beschnittbereichs die Beschneidung zur endgültigen Form des Bauteils erfolgen. Dies ist besonders sinnvoll, da beim Ausfüllen der Aussparung durch einen Platzhalter nicht garantiert werden kann, dass die Aussparung tatsächlich derart bündig mit der Oberfläche des Formwerkzeugs abschließt, das im resultierenden Bauteil keine Kante, kein Knick und keine leichte Wellenform zu erkennen sind. Da der Beschnittbereich ohnehin nicht am Bauteil verbleibt, ist eine leichte Formabweichung in diesem Bereich nicht kritisch.

Die Aussparung in dem Formwerkzeug erstreckt sich von dem Beschnittbereich nach außen, so dass eine Überlappung zwischen dem Beschnittbereich und der Aussparung vorliegt. Dies ermöglicht das Entnehmen des Platzhalters aus der Aussparung, wenn das Bauteil gelegt, laminiert und ausgehärtet ist.

Sobald das Bauteil in seiner Rohform - d.h. noch nicht zur Endform beschnitten und im Folgenden auch "Rohbauteil" genannt - in dem Formwerkzeug vorliegt, kann der Platzhalter entnommen werden, wodurch unterhalb eines Abschnitts des Beschnittbereichs ein Hohlraum mit einer Öffnung nach außen entsteht. In diese Öffnung kann ein Hebekissen eingeführt werden, welches aus seinem elastischen Werkstoff besteht und durch Befüllen mit Druckluft oder einem anderen geeigneten Medium ausgedehnt wird. Daraus resultiert eine im Vergleich zu den bekannten Keilwerkzeugen sehr großflächige Krafteinleitung, wodurch keine punktuelle, einseitige Lasteinleitung, örtliche Biegung oder andere Belastungsspitze hervorgerufen wird. Die Krafteinleitung ist wohldefiniert, so dass insbesondere bei dünnschaligen, großflächigen Bauteilen oder Bauteilbereichen die Dimensionierungsgrenzen hinsichtlich mechanischer Festigkeit, z.B. eine vorgegebene Biegelinie, durch das Entformen nicht überschritten werden. Die Folge davon ist eine Reduktion von sichtbaren oder unsichtbaren Beschädigungen des Faerverbundwerkstoffs, was insbesondere bei sicherheitsrelevanten Komponenten ein Reduktion von aufwendigen und zusätzlichen Prüfschritten bedeutet, um die Unversehrtheit des Bauteils sicherzustellen. Dadurch werden die direkt der Herstellung des Bauteils zuzurechnenden Kosten reduziert.

Das endgültige Entformen eines größeren Bauteils kann durch das Nachschieben und Aufblasen weiterer Hebekissen sichergestellt werden. Ist zunächst das erste Hebekissen in der Aussparung weit genug aufgeblasen, dass das Bauteil ein Stück aus dem Formwerkzeug angehoben wird, kann in den zusätzlichen, entstandenen Hohl- oder Zwischenraum unter dem Bauteil ein weiteres Hebekissen eingebracht werden.

Aus der Bauteildimensionierung lässt sich eine maximal zulässige Biegelinie des Bauteils errechnen. Diese wird durch eine entsprechende Dimensionierung der Hebekissen nicht überschritten. Bevorzugt könnte ein System zum Herstellen von Bauteilen aus Faserverbundwerkstoffen eine automatische Steuerung von mehreren Hebekissen durch eine entsprechend programmierte Recheneinheit oder ein anderes Elektronikgerät aufweisen, das den Entformprozess steuert und überwacht.

Je nach Bauteilgeometrie und Anforderung können speziell geformte Geometrien für das Hebekissen zur Anwendung kommen. Dies unterstützt insbesondere die Entformung von Bauteilen mit leichten Hinterschnitten.

In Bauteilbereichen, in denen in einem weiteren Fertigungsschritt ein Durchbruch bzw. ein Geometriebereich herausgetrennt wird, können Hebekissen aus temperaturbeständigen Materialien bereits vor dem Laminieren des Bauteils eingesetzt werden. Dabei ist sicherzustellen, dass das Formwerkzeug mit einem vorinstallierten Anschluss für das in das integrierte Hebekissen zuführende Medium versehen ist und das Hebekissen derartig in das Formwerkzeug gesetzt wird, dass kein Harz zwischen dem Formwerkzeug und dem Hebekissen hindurch treten kann. Durch derartige vorinstallierte, über die Fläche des zu fertigenden Bauteils verteilten Hebekissen könnte eine vollautomatisierte Entformung in einem Serienprozess umgesetzt werden. Über eine zentrale Steuerung am Formwerkzeug könnten die Hebekissen entsprechend einer möglichst schonenden Entformung angesteuert und aufgeblasen werden.

Neben offenen Formwerkzeugkonzepten mit männlichen oder weiblichen Formwerkzeugen könnte das erfindungsgemäße Verfahren auch bei geschlossenen Werkzeugkonzepten, wie etwa bei Harzinjektionsverfahren ("Resin Transfer-Moulding", RTM) zur Anwendung kommen. Die Hebekissen könnten dabei in ihrer Größe reduziert werden, so dass sie noppenartige Hebekissen oder Hebenoppen bilden. Durch das Ansteuern mehrerer integrierter kleinerer Hebenoppen könnte das Bauteil im Sinne einer Serienfertigung möglichst automatisch vollständig entformt werden.

Insgesamt bietet das erfindungsgemäße Verfahren zum Herstellen eines Rohbauteils aus Faserverbundwerkstoffen einige Vorteile gegenüber bekannten Fertigungsverfahren mit gängigen manuellen Entformprozessen. Beispielsweise könnte sowohl der Weg als auch die Kraft beim Entformprozess gesteuert werden, so dass ein unnötige Bauteilbiegebeanspruchung vermieden werden könnte. Gleichermaßen reduziert sich das Risiko einer Beschädigung des Bauteils beim Entformen, da eine vordefinierte maximale Biegelinie eingehalten werden könnte. Dadurch reduziert sich die Anzahl von Reparaturen, die bei während des Entformprozess beschädigten Bauteilen notwendig sind. Besonders hochkritische Bauteile, beispielsweise Solarzellenpanels von Satelliten, können durch das vorgeschlagene Verfahren sanft entformt werden, insbesondere da keine punktuelle Lasteinleitung beim Entformen auftritt. Die Flächenlast beim Entformen kann durch die konkrete Ausgestaltung des Hebekissens speziellen Bauteilgeometrien angepasst werden. Zur Kosten- und Zeiteinsparung ist eine Automatisierung möglich. Ist das zu entformenden Bauteil sehr fest bzw. sehr steif, können durch das erfindungsgemäße Verfahren entsprechend deutlich höhere Kräfte beim Entformen eingeleitet werden, als bei derzeit bekannten manuellen Entformprozessen. Durch eine Parallelschaltung der Hebekissen ist schließlich ein gleichzeitiges Anheben mehrerer Bauteilbereiche möglich, so dass sich auch dadurch die lokalen Biegebelastungen reduzieren.

Die Aufgabe wird ebenfalls durch ein Formwerkzeug gemäß dem Anspruch 7 gelöst, das in einem Beschnittbereich mindestens eine Aussparung aufweist, in die ein Hebekissen unterhalb des zu fertigenden Bauteils eingeführt werden kann.

Es wird darauf hingewiesen, dass Merkmale und Nebeneffekte der vorliegenden Erfindung mit Verweis auf verschiedene Ausführungsformen der Erfindung beschrieben worden sind. Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in dieser Kombination den Gegenstand der Erfindung auch unabhängig von ihrer Zusammensetzung in den einzelnen Ansprüche oder deren Rückbeziehungen.

### KURZE BESCHREIBUNG DER FIGUREN

In den Figuren stehen gleiche Bezugszeichen für gleiche oder ähnliche Objekte.
Fig. 1 a zeigt eine schematische Übersicht des erfindungsgemäßen Verfahrens.
Fig. 1b zeigt eine schematische Übersicht eines Ausführungsbeispiels des erfindungsgemäßen Verfahrens.
Fig. 2 zeigt eine schematische Ansicht eines erfindungsgemäßen Systems.
Fig. 3 zeigt eine schematische Ansicht des erfindungsgemäßen Formwerkzeugs.
Fig. 4 zeigt ein Flugzeug, welches Bauteile aufweist, die durch das erfindungsgemäße Verfahren hergestellt worden sind.

### DETAILLIERTE BESCHREIBUNG DER ZEICHNUNGEN

In Fig. la wird das erfindungsgemäße Fertigungsverfahren gezeigt. Das erfindungsgemäße Verfahren beginnt mit dem Schritt des Einbringens 2 der Platzhalter in entsprechende Aussparungen des Formwerkzeugs. Hiernach schließt sich der Schritt des Erstellens 4 des Rohbauteils an. Dieser besteht üblicherweise aus den einzelnen Vorgängen Legen, Laminieren und Aushärten, ohne hier jedoch einen Anspruch auf Vollständigkeit und Korrektheit der Reihenfolge zu erheben. Im Stand der Technik existieren zahlreiche unterschiedliche Vorgehensweisen zum Erstellen eines Rohbauteils aus Faserverbundwerkstoffen, dass beispielsweise das Legen von Fasern von Hand, das Laminieren von Hand und anschließende Aushärten ebenso umfasst wie beispielsweise maschinell betriebene Lege- und Harzinjektionsverfahren.

Nachdem das Rohbauteil erstellt ist, werden die Platzhalter entfernt 6. Wie in der Beschreibungseinleitung bereits dargelegt, befindet sich nach dem Entfernen 6 der Platzhalter eine Aussparung unterhalb eines Beschnittbereichs in dem Formwerkzeug. Hierein können Hebekissen eingebracht werden 8, die anschließend aufgeblasen werden 10. Das Aufblasen 10 sollte bevorzugt in einer kontrollierten Weise stattfinden, so dass übermäßige Bauteilbiegebelastungen vermieden werden können. Besonders bevorzugt werden die Hebekissen stückweise aufgeblasen 10 und in die daraufhin entstehenden Zwischenräume zwischen dem Bauteil und dem Formwerkzeug werden weitere Hebekissen nachgeschoben 12 und ebenso aufgeblasen 10. Durch diese sukzessive Vorgehensweise wird das Bauteil schonend vom Formwerkzeug entformt.

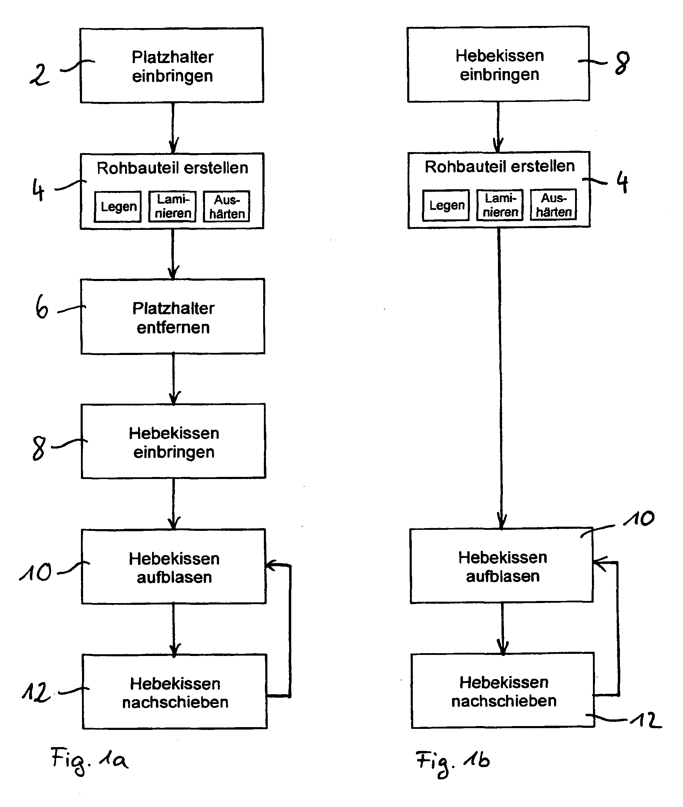

Ein zweites Ausführungsbeispiel des erfindungsgemäßen Verfahrens wird in Fig. 1b gezeigt. Das Verfahren aus Fig. 1b kann alternativ oder zusätzlich zu dem in Fig. 1a gezeigten Verfahren durchgeführt werden. Beispielsweise können größere Bauteile bereichsweise unter Einsatz des Verfahrens aus Fig. 1a hergestellt werden, in anderen Bereichen unter Einsatz des Verfahrens auf Fig. 1b, wenn etwa Durchbrüche nur in einem Bereich des Bauteils auftreten.

Hier werden Hebekissen bereits vor dem Erstellen des Rohbauteils 4 eingebracht 8, beispielsweise in Bereiche des Formwerkzeugs, in denen Durchbruchgeometrien oder andere Geometrieunterbrechungen hergestellt werden. Dies bedeutet, dass das oder die Hebekissen in Bereichen liegen, in denen später keine Oberfläche vorhanden ist, so dass dementsprechend etwaige Knicke, Falten, Wellungen oder dergleichen keine Relevanz haben. Besonders wichtig ist hierbei zu beachten, dass die eingebrachten Hebekissen eine Temperaturbeständigkeit aufweisen, die ein Mitführen der Hebekissen zwischen dem Bauteil und dem Formwerkzeug in eine Aushärtungsvorrichtung erlaubt. Ein Aushärten könnte beispielsweise bei einer Temperatur von knapp unter 200°C ausgeführt werden, so dass die Hebekissen für das erfindungsgemäße Verfahren nach dem zweiten Ausführungsbeispiel eine entsprechend hohe Temperaturfestigkeit aufweisen müssen. Weiterhin ist hierbei zu beachten, dass das Formwerkzeug Anschlüsse für ein in die Hebekissen zu befördernden Mediums aufweist, beispielsweise Druckluftanschlüsse.

Nach dem Erstellen des Rohbauteils 4 werden die Hebekissen aufgeblasen 10, in die entstehenden Zwischen oder Hohlräume zwischen dem Bauteil und dem Formwerkzeug können weitere Hebekissen nachgeschoben werden 12, die dann ebenfalls aufgeblasen werden 10. So entsteht auch das wie in Fig. 1a geschilderte sukzessive Hebeverfahren durch aufgeblasene Hebekissen.

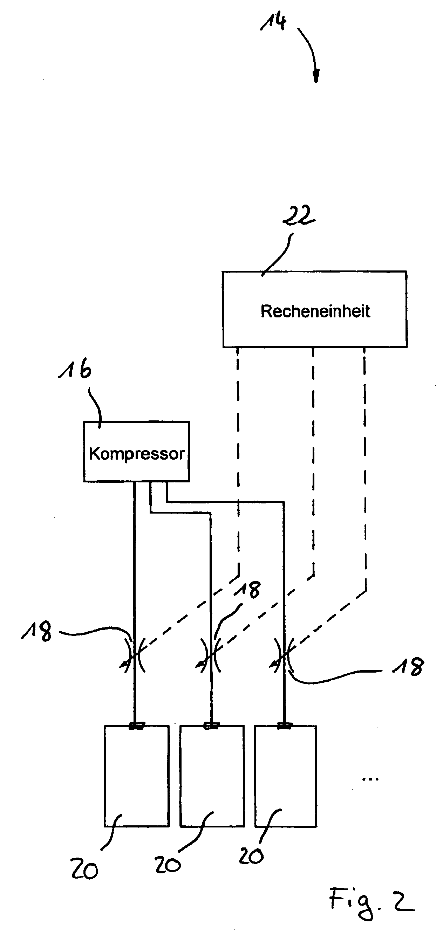

In Fig. 2 wird ein mögliches erfindungsgemäßes System zum Herstellen eines Bauteils aus Faserverbundwerkstoffen 14 vorgestellt, welches eine Fluidquelle in Form eines Kompressors 16 aufweist, der über Ventile 18 mit Hebekissen 20 verbunden ist. Durch Einstellen des Strömungswiderstands oder dergleichen der einzelnen Ventile 18 können wahlweise einzelne oder eine Kombination aus den dargestellten Hebekissen 20 aufgeblasen werden. Die Darstellung in Fig. 2 ist exemplarisch zu verstehen, es können jedwede Anzahlen von Hebekissen 20 oder die in der Beschreibungseinleitung genannten Hebenoppen eingesetzt werden, was sich allein durch die Größe des herstellenden Bauteils, dessen Komplexität, Hinterschnitte oder dergleichen bestimmt. Um eine möglichst effektive Bauteilschonung zu erreichen, ist denkbar, eine Recheneinheit 22 einzusetzen, die den gesamten Entformvorgang überwacht und steuert. So könnte die Recheneinheit 22 das Aufblasen der einzelnen Hebekissen 20 individuell voneinander steuern, um so automatisch die maximal vorgegebene Biegelinie des Bauteils nicht zu überschreiten.

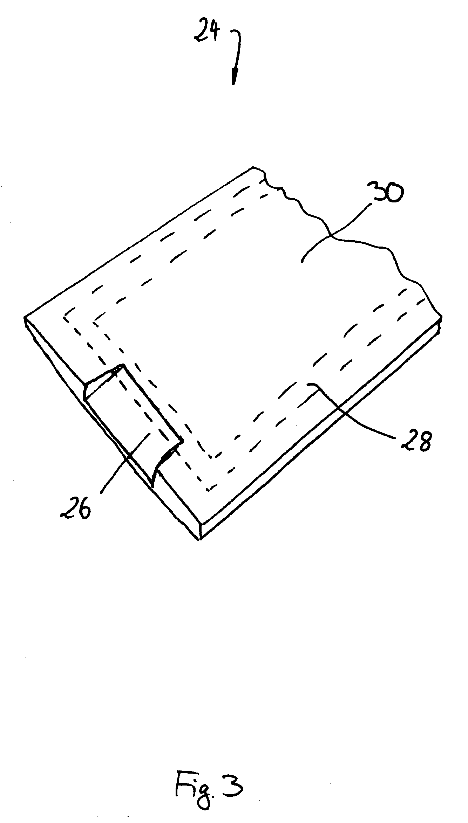

In Fig. 3 wird exemplarisch ein Formwerkzeug 24 gezeigt, das beispielhaft eine Aussparung 26 zum Einführen eines Hebekissens 20 aufweist. Für den Fachmann wird klar, dass das Formwerkzeug 24 eine deutlich größere Anzahl von Aussparungen 26 aufweisen kann. Der in Fig. 3 gezeigte gestrichelte Bereich 28 stellt den sogenannten Beschnittbereich dar, in dem sich das hergestellte Bauteil erstreckt, der nach Aushärten des Bauteils jedoch beschnitten wird, um dem Bauteil die endgültige Form zu verleihen. Es wird ersichtlich, dass in die Aussparung 26 ein Hebekissen eingeführt werden kann, wenn noch ein Bauteil bündig auf der Oberfläche 30 des Formwerkzeugs 24 aufliegt. Durch Aufblasen eines Hebekissens innerhalb der Aussparung 26 kann sich ein Teil des Bauteils im Bereich der Aussparung 26 von der Oberfläche 30 des Formwerkzeugs 24 lösen, so dass weitere Hebekissen zwischen die Oberfläche 30 des Formwerkzeugs 24 und dem Bauteil eingeschoben werden können.

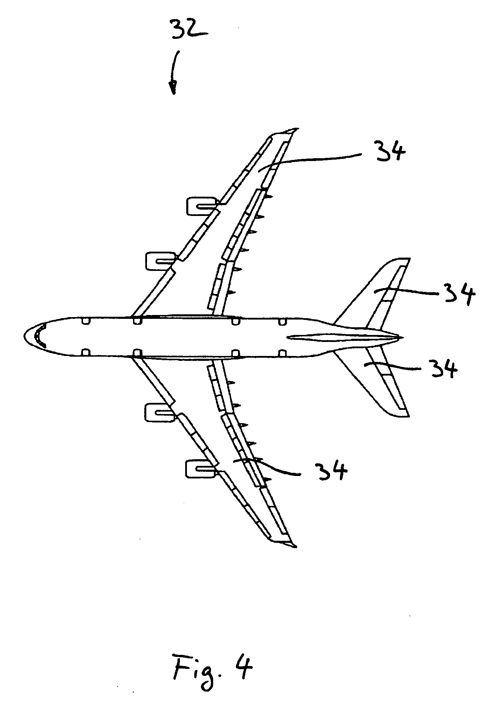

In Fig. 4 wird exemplarisch ein Flugzeug 32 gezeigt, das mehrere Bauteile 34 aufweist, die mit dem erfindungsgemäßen Verfahren, auf dem erfindungsgemäßen Formwerkzeug 24 und unter Verwendung eines erfindungsgemäßen Systems 14 hergestellt sind.

Ergänzend ist darauf hinzuweisen, dass "aufweisen" keine anderen Elemente oder Schritte ausschließt und "eine" oder "ein" keine Vielzahl ausschließt.

### BEZUGSZEICHEN

| | |
|---|---|
| 2 | Platzhalter einbringen |
| 4 | Rohbauteil erstellen |
| 6 | Platzhalter entfernen |
| 8 | Hebekissen einbringen |
| 10 | Hebekissen aufblasen |
| 12 | Hebekissen nachschieben |
| 14 | Erfindungsgemäßes System |
| 16 | Kompressor |
| 18 | Ventil |
| 20 | Hebekissen |
| 22 | Recheneinheit |
| 24 | Formwerkzeug |
| 26 | Aussparung |
| 28 | Beschnittbereich |
| 30 | Oberfläche des Formwerkzeugs |
| 32 | Flugzeug |
| 34 | Bauteil |

## Patentansprüche

1. Verfahren zum Herstellen eines Rohbauteils aus Faserverbundwerkstoffen, aufweisend die Schritte:
- Einbringen (2) von mindestens einem Platzhalter in jeweils mindestens einer Aussparung (26) in einem Formwerkzeug (24),
- Erstellen (4) des Rohbauteils,
- Entfernen (6) des Platzhalters,
- Einbringen (8) mindestens eines Hebekissens (20) in die mindestens eine Aussparung (26) und
- Entformen des Rohbauteils durch Aufblasen (10) des mindestens einen Hebekissens (20).

2. Verfahren nach Anspruch 1, aufweisend die weiteren Schritte des Nachschiebens (12) mindestens eines weiteren Hebekissens (20) und Aufblasens (10) des mindestens einen weiteren Hebekissens (20).

3. Verfahren nach Anspruch 1 oder 2, bei dem das mindestens eine Hebekissen (20) vor Erstellen (4) des Rohbauteils eingebracht (8) wird.

4. Verfahren nach einem der vorhergehenden Ansprüche, bei dem das mindestens eine Hebekissen (20) nur so weit aufgeblasen (10) wird, dass die Biegelinie des Rohbauteils eine vorgegebene, zulässige Biegelinie nicht überschreitet.

5. Verfahren nach einem der vorhergehenden Ansprüche, bei dem ein Recheneinheit (22) mittels Ventilen (18) das Aufblasen (10) mehrerer Hebekissen (20) steuert.

6. Verfahren nach Anspruch 5, bei dem die Recheneinheit (22) in Abhängigkeit von der Biegelinie des Rohbauteils das Aufblasen (10) der Hebekissen (20) steuert.

7. Formwerkzeug (24) zum Herstellen (4) eines Rohbauteils aus Faserverbundwerkstoffen, **dadurch gekennzeichnet, daß** das Formwerkzeug eine Aussparung (26) und einem Platzhalter für die Aussparung (26) aufweist,
wobei der Platzhalter die Aussparung vollständig ausfüllt, mit der Oberfläche des Formwerkzeugs bündig abschließt und aus der Aussparung (26) lösbar ist, wenn sich auf dem Formwerkzeug ein ausgehärtetes Rohbauteil befindet,
wobei in die Aussparung mindestens ein Hebekissen unterhalb eines Bereiches des zu fertigenden Rohbauteiles einbringbar ist und
wobei die Aussparung (26) in einem Beschnittbereich (28) des zu fertigenden Rohbauteiles angeordnet ist und sich von dort nach außen erstreckt.

8. System (14) zum Herstellen von Bauteilen aus Faserverbundwerkstoffen, aufweisend mindestens ein Formwerkzeug (24) nach Anspruch 7 mit mindestens einer Aussparung (26) zum Einbringen mindestens eines Hebekissens (20), ferner aufweisend mindestens eine Fluidquelle zum Aufblasen (10) des mindestens einen Hebekissens (20), mindestens ein Ventil (18) für das mindestens eine Hebekissen (20) sowie mindestens eine Recheneinheit (22) zum Ansteuern des mindestens einen Ventils (18).

9. System (14) nach Anspruch 8, wobei die Recheneinheit (22) dazu eingerichtet ist, das mindestens eine Hebekissen (20) derart anzusteuern, dass eine maximal vorgegebene Biegelinie des Rohbauteils nicht überschritten wird.

## Claims

1. A method for manufacturing of an unfinished component from composite fiber materials, comprising the steps:
- inserting (2) at least one placeholder into at least one respective recess (26) in a molding tool (24),
- producing (4) the unfinished component,
- removing (6) the placeholder,
- inserting (8) at least one lifting pad (20) into the at least one recess (26), and
- removing the unfinished component from the mold by inflating (10) the at least one lifting pad (20).

2. The method of claim 1, comprising the additional steps of subsequently inserting (12) at least one further lifting pad (20) and inflating (10) the at least one further lifting pad (20).

3. The method of claim 1 or 2, in which the at least one lifting pad (20) is inserted (8) prior to the production (4) of the unfinished component.

4. The method of one of the preceding claims, in which the at least one lifting pad (20) is only inflated (10) to such a degree that the elastic line of the unfinished component does not exceed a predetermined permissible elastic line.

5. The method of one of the preceding claims, in which a computer unit (22) controls the inflation (10) of several lifting pads (20) by means of valves (18).

6. The method of claim 5, in which the computer unit (22) controls the inflation (10) of the lifting pants (20) in dependence on the elastic line of the unfinished component.

7. A molding tool (24) for producing (4) an unfinished component from composite fiber materials,
**characterised in that** the molding tool comprises a recess (26) and a placeholder for the recess (26),
wherein the placeholder fills out the recess completely, ends flush with the surface of the of the molding tool and is removable from the recess (26) when a cured unfinished component is present on the molding tool,
wherein at least one lifting pad (20) is insertable underneath a region of the unfinished component to be manufactured is insertable and
wherein the reces (26) is arranged in a trimming region (28) of the unfinished component to be manufactured and extends outwardly from there.

8. A system (14) for manufacturing components from composite fiber materials, comprising at least one molding tool (24) according to claim 7 with at least one recess (26) for inserting at least one lifting pad (20), furthermore comprising at least one fluid source for inflating (10) the at least one lifting pad (20), at least one valve (18) for the at least one lifting pad (20) and at least one computer unit (22) for controlling the at least one valve (18).

9. The system (14) of claim 8, wherein the computer unit (22) is adapted for controlling the at least one lifting pad (20) in such a way that a predetermined maximum elastic line of the unfinished component is not exceeded.

## Revendications

1. Procédé de fabrication d'une pièce brute en matériaux composites renforcés par des fibres, comportant les étapes de :
mise en place (2) d'au moins un repère de position dans respectivement au moins un évidement (26) dans un moule de formage (24),
réalisation (4) de la pièce brute,
retrait (6) du repère de position,
mise en place (8) d'au moins un coussin de levage (20) dans l'au moins un évidement (26) et
démoulage de la pièce brute en gonflant (10) l'au moins un coussin de levage (20).

2. Procédé selon la revendication 1, comportant les étapes supplémentaires d'expulsion (12) d'au moins un coussin de levage (20) supplémentaire et de gonflage (10) de l'au moins un coussin de levage (20) supplémentaire.

3. Procédé selon la revendication 1 ou 2, dans lequel l'au moins un coussin de levage (20) est mis en place (8) avant la réalisation (4) de la pièce brute.

4. Procédé selon l'une des revendications précédentes, dans lequel l'au moins un coussin de levage (20) n'est gonflé (10) que jusqu'à ce que la ligne de pliage de la pièce brute ne dépasse pas une ligne de pliage admissible prédéfinie.

5. Procédé selon l'une des revendications précédentes, dans lequel une unité de calcul (22) commande le gonflage (10) de plusieurs coussins de levage (20) au moyen de soupapes (18).

6. Procédé selon la revendication 5, dans lequel l'unité de calcul (22) commande le gonflage (10) du coussin de levage (20) en fonction de la ligne de pliage de la pièce brute.

7. Moule de formage (24) pour fabriquer (4) une pièce brute en matériaux composites renforcés par des fibres, **caractérisé par le fait que** le moule de formage présente un évidement (26) et un repère de position pour l'évidement (26),
le repère de position remplissant entièrement l'évidement, obturant à fleur la surface du moule de formage et pouvant être libéré de l'évidement(26) quand une pièce brute durcie se trouve sur le moule de formage,
au moins un coussin de levage pouvant être mis en place dans l'évidement sous une zone de la pièce brute à fabriquer et
l'évidement (26) étant disposé dans une zone de découpe (28) de la pièce brute à fabriquer et s'étendant de cet endroit vers l'extérieur.

8. Système (14) de fabrication de pièces en matériaux composites renforcés par des fibres,
présentant au moins un moule de formage (24) selon la revendication 7 comportant au moins un évidement (26) pour mettre en place l'au moins un coussin de levage (20),
présentant en outre au moins une source de fluide pour gonfler (10) au moins un coussin de levage (20), au moins une soupape (18) pour l'au moins un coussin de levage (20) ainsi qu'au moins une unité de calcul (22) pour commander l'au moins une soupape (18).

9. Système (14) selon la revendication 8, l'unité de calcul (22) étant agencée pour commander l'au moins un coussin de levage (20) de telle sorte qu'une ligne de pliage maximale prédéfinie de la pièce brute ne soit pas dépassée.
